(19) Europäisches Patentamt
European Patent Office
Office européen des brevets

(11) **EP 3 495 837 B1**

(12) **FASCICULE DE BREVET EUROPEEN**

(45) Date de publication et mention
de la délivrance du brevet:
**01.01.2025 Bulletin 2025/01**

(51) Classification Internationale des Brevets (IPC):
***G01S 5/02*** *(2010.01)* ***G01S 5/16*** *(2006.01)*

(21) Numéro de dépôt: **18206958.3**

(52) Classification Coopérative des Brevets (CPC):
**G01S 5/0242; G01S 5/0072; G01S 5/0278;
G01S 5/0289; G01S 5/16**

(22) Date de dépôt: **19.11.2018**

(54) **PROCÉDÉ ET SYSTÈME D'ESTIMATION DE POSITION PAR RECALAGE COLLABORATIF SUR AMERS INCONNUS**

VERFAHREN UND SYSTEM ZUR POSITIONSSCHÄTZUNG DURCH GEMEINSAME POSITIONSBESTIMMUNG MIT HILFE VON UNBEKANNTEN BEZUGSMARKEN

METHOD AND SYSTEM FOR POSITION ESTIMATION BY COLLABORATIVE REPOSITIONING USING UNKNOWN LANDMARKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.11.2017 FR 1701208**

(43) Date de publication de la demande:
**12.06.2019 Bulletin 2019/24**

(73) Titulaire: **Thales**
**92400 Courbevoie (FR)**

(72) Inventeur: **HEURGUIER, Dominique**
**92622 GENNEVILLIERS CEDEX (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 2 785 124       US-A1- 2010 246 405
US-A1- 2011 059 752     US-A1- 2012 081 248**

**Description**

L'objet de la présente invention concerne un procédé et un système permettant d'effectuer un recalage collaboratif global prenant en compte un ensemble d'unités mobiles appartenant à un même groupe ainsi que des amers de positions non connues, mais qui sont en visibilité de plusieurs unités mobiles.

L'invention peut être utilisée pour un recalage cartographique avec des outils de relèvement classiques (relevé angulaire par pointage visuel et/ou relevé de distance avec un télémètre) sur des amers géographiques mais aussi pour la localisation d'un ou plusieurs émetteurs radios avec des unités radios mobiles configurées pour effectuer des relèvements (goniométrie et/ou télémétrie radio) .

Le mot « amer » désigne un objet fixe remarquable de l'environnement connu du système. Par extension, le mot « amer radio » désigne un émetteur radio. Ce dernier n'est pas connu du système qui cherche à le localiser.

Le terme groupe est utilisé pour désigner un ensemble d'unités mobiles, ou plateformes qui sont programmées pour communiquer entre elles et s'échanger des informations. Le mot « visibilité » est utilisé pour préciser qu'un amer est détecté (visuellement ou par radio s'il s'agit d'un amer radio) et que la plateforme est capable d'effectuer des relevés sur cet amer.

Dans la suite de la description, le mot noeud désigne indifféremment une plateforme et/ou un amer. Le terme recalage est utilisé pour désigner un repositionnement d'une plateforme.

Le recalage sur amer est une technique connue pour permettre à un noeud mobile de recaler sa position, c'est-à-dire améliorer la précision de sa géolocalisation.

L'un des problèmes techniques posé est l'incapacité de recalage de noeuds ou de groupes de noeuds lorsque les positions des amers ne sont pas connues.

Le recalage sur amer repose sur la mesure de direction des amers (goniométrie), éventuellement complétée de mesures de distances (télémétrie) et d'un algorithme de géolocalisation prenant en compte éventuellement les précisions de mesures et, plus rarement, l'imprécision de position des amers. Les imprécisions sont généralement caractérisées par l'homme du métier par un intervalle d'incertitude, une erreur circulaire probable « Circular Error Probability, CEP » à x % ou par une variance.

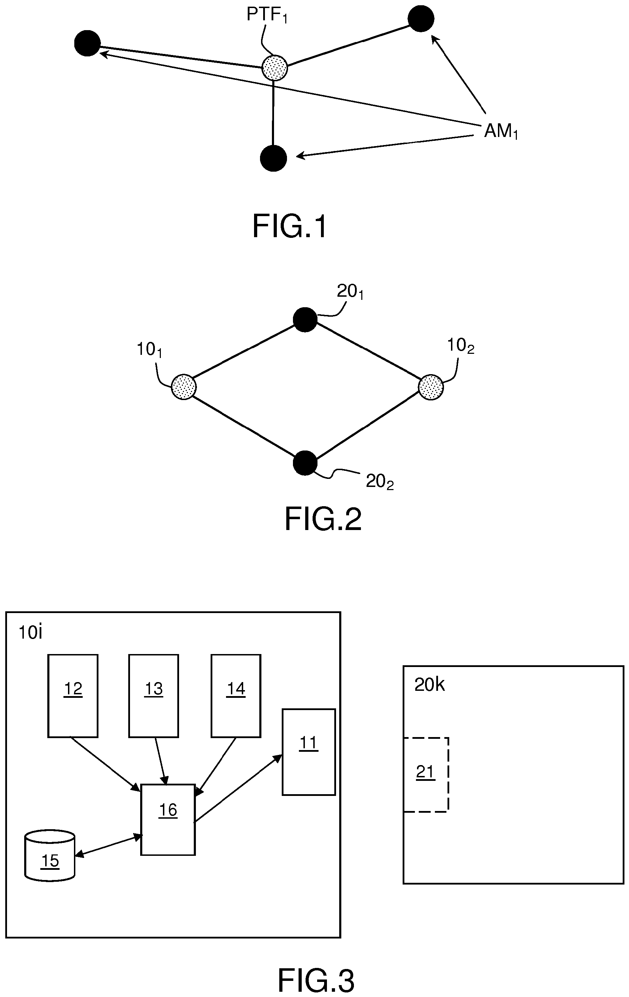

La figure 1 illustre une solution connue de l'art antérieur pour le recalage d'une seule plateforme $PTF_1$ sur des amers de position connue. La technique effectue une relocalisation d'une plateforme $PTF_1$ par triangulation sur trois amers $AM_1$ de positions connues en effectuant un relevé des directions des amers suivi d'une triangulation.

L'enseignement technique de la demande de brevet US 2012/0081248 A1 concerne un système et un procédé pour localiser une station mobile. Pour cela, US 2012/0081248 A1 effectue des mesures de télémétrie sur les signaux RF reçus, classifie les signaux RF selon un critère prédéterminé de paramètres et, en fonction des mesures de télémétrie effectuées et du classement des signaux reçus, le procédé va déterminer une position d'un mobile.

L'enseignement technique de la demande de brevet US20110059752 A1 décrit un procédé pour estimer l'emplacement de stations mobiles dans un réseau. Le procédé se limite à des émetteurs radio coopératifs sur lesquels sont effectuées des mesures de distances.

L'un des inconvénients des méthodes connues de l'art antérieur est l'incapacité d'utiliser l'amer si la position de celui-ci n'est pas connue.

L'invention concerne un procédé de recalage collaboratif selon la revendication 1.

Selon un mode de réalisation, le vecteur d'état $u$ est estimé en maximisant la probabilité :

$$p(m/u) = \frac{1}{(2\pi)^{\frac{N}{2}}|B|^{1/2}} \exp\left(-\frac{1}{2}[m - h(u)]^T B^{-1}[m - h(u)]\right)$$

avec N la dimension du vecteur d'observation, B la matrice de covariance des mesures, $h(u)$, la fonction d'observation globale de u, T la transposée.

Le vecteur d'état $u$ peut aussi être estimé en minimisant la forme quadratique :

$$Q(u) = [m - h(u)]^T B^{-1}[m - h(u)]$$

avec N la dimension du vecteur d'observation, B la matrice de covariance des mesures, $h(u)$, la fonction d'observation globale de u, T la transposée.

Dans ce cas, l'algorithme de Gauss-Newton est utilisé et le procédé exécute les étapes suivantes :
Développement du vecteur d'état h(u) au premier ordre :

$$h(u) = h(u_0) + H(u - u_0)$$

Calcul de la matrice Jacobienne H, de dimension (2M+L+K, 2M) de la fonction d'observation globale.

$$H = \begin{bmatrix} & \vdots & \vdots & \\ \dots & \dfrac{\partial h_i}{\partial x_j} & \dfrac{\partial h_1}{\partial y_j} & \dots \\ & \vdots & \vdots & \end{bmatrix}$$

avec la sous-matrice d'observation de position:

$$H_p = \begin{bmatrix} & & & \vdots & & & \\ \dots & -\dfrac{y_i - y_j}{d_{ij}^2} & \dfrac{x_{im} - x_j}{d_{ij}^2} & \dots \dfrac{y_i - y_j}{d_{ij}^2} & -\dfrac{x_{im} - x_j}{d_{ij}^2} & \dots \\ & & & \vdots & & & \end{bmatrix}$$

où

$$d_{ij} = \sqrt{\left(x_i - x_j\right)^2 + \left(y_i - y_j\right)^2}$$

avec la sous-matrice d'observation de distances :

$$H_d = \begin{bmatrix} & & & \vdots & & & \\ \dots & -\left(x_i - x_j\right)/d_{icj} & -\left(y_i - y_j\right)/d_{ij} & \dots\left(x_i - x_j\right)/d_{icj} & -\left(y_i - y_j\right)/d_{ij} & \dots \\ & & & \vdots & & & \end{bmatrix}$$

où

$$d_{ij} = \sqrt{\left(x_i - x_j\right)^2 + \left(y_i - y_j\right)^2}$$

- Initialisation de $u_0$ avec les 2M premières composantes sont initialisées avec les positions initiales des plateformes;
- les 2I dernières composantes sont initialisées par une heuristique avec le nombre d'amers de positions inconnues

$$u_o = \begin{bmatrix} \vdots \\ x_i \\ y_i \\ \vdots \end{bmatrix}$$

Définition d'un estimateur du maximum de vraisemblance par $\hat{u} = u_0 + (H^T B^{-1} H)^{-1} H^T B^{-1} [m - h(u_0)]$ après linéarisation du vecteur $u_0$, on itère en faisant une estimation linéaire et en définissant le critère d'arrêt par un seuil sur la norme de $\|u_i - u_{i-1}\|$ correspondant à l'ensemble des noeuds afin d'obtenir un vecteur comprenant :

- l'ensemble des réestimations de positions pour toutes les plateformes,
- une estimation de position pour tous les amers.

Le procédé selon l'invention est notamment utilisé pour estimer des positions d'un ou de plusieurs émetteurs dans un réseau de radiogoniomètres mobiles en prenant en compte les imprécisions sur les positions des plateformes.

L'invention concerne aussi un système selon la revendication 4.

Une plateforme comporte, par exemple, une base de données.

D'autres caractéristiques et avantages de la présente invention apparaîtront mieux à la lecture de la description d'exemples de réalisation donnés à titre illustratif et non limitatif annexée des figures qui représentent :

- Figure 1, une solution connue de l'art antérieur,
- Figure 2, un schéma de principe du procédé et du système selon l'invention,
- Figure 3, un exemple de détails des modules équipant les plateformes et les amers permettant la mise en oeuvre de l'invention, et
- Figure 4, une variante de réalisation du procédé pour la localisation d'émetteurs à partir de véhicules mobiles.

Le procédé selon cette invention consiste, notamment, à effectuer des recalages collaboratifs simultanés. Le principe suppose la présence d'au moins un amer perçu par au moins deux plateformes du réseau collaboratif. La réestimation de position des plateformes est effectuée conjointement avec l'estimation de position de l'amer, par exemple en mettant en oeuvre un critère de moindres carrés pondérés, ou une technique de maximum de vraisemblance global, ces techniques étant bien connues de l'homme du métier. La prise en compte globale des contraintes d'amers communs, i.e., vus par au moins deux plateformes, même si les positions de ces amers sont inconnues, permet d'augmenter la précision de géolocalisation alors qu'aucun recalage individuel « classique » n'est possible sur ces amers de positions inconnues.

La figure 2 représente un exemple d'application de l'invention dans un groupe comprenant au moins deux plateformes $10_1$, $10_2$, observant deux amers $20_1$, $20_2$ de positions inconnues. Les plateformes échangent des informations leurs permettant d'identifier ces amers et de savoir ceux qu'elles observent en commun. L'identification d'un amer peut être réalisée par une description de l'amer, une photo, etc.

La figure 3 illustre un exemple de modules et d'éléments présents dans une plateforme et éventuellement dans un amer radio, utilisés pour mettre en oeuvre le procédé selon l'invention.

Une plateforme ou noeud 10i ($10_1$, $10_2$) comprend au moins un premier module de communication 11 configuré pour recevoir des informations ou des données en provenance d'une ou de plusieurs autres plateformes, et pour émettre des informations vers ce ou ces mêmes plateformes. Elle comporte aussi un module de mesures de distances 12, et un dispositif de mesures d'angles 13, un dispositif 14 permettant une estimation de positions et un module de recalage 16 de la position des plateformes (par exemple un processeur) ayant notamment pour fonction de recalculer la position des plateformes et en même temps de calculer la position d'un amer, la position initiale de l'amer n'étant pas connue. Les amers exploités pour un recalage d'une plateforme peuvent être communs à plusieurs plateformes, i.e., le mot commun signifiant que les plateformes d'un groupe de communication vont utiliser ce(s) même(s) amer(s) de positions inconnues pour recalculer leur position avec une meilleure précision et se recaler, i.e., repositionnement de manière plus précise. Les informations de recalage (nouvelles positions obtenues après la mise en oeuvre du procédé) seront transmises aux plateformes faisant partie d'un même groupe afin de permettre la mise à jour de leur base de données 15, par le medium de communication.

Dans le cas particulier d'un amer radio $20_k$, celui-ci comprend au moins un émetteur 21 (représenté en tirets sur la figure) configuré pour émettre un signal radio permettant aux plateformes d'effectuer des mesures de distances ou d'angles sur ce signal, selon un principe connu de l'homme du métier.

L'un des objectifs de la présente invention est de permettre à une plateforme de connaître sa position avec une meilleure précision afin de se repositionner. L'information de position corrigée pour la plateforme recalée peut ensuite être transmise aux autres plateformes qui sont en communication avec cette dernière. Dans le même temps, la position de l'amer de position initialement inconnue sera calculée. Dans l'exemple donné qui suit, les plateformes communiquent par liaisons radios.

Les plateformes peuvent s'échanger des informations sur les amers (identifiant, position), les labéliser (i.e. leur attribuer un identifiant unique au niveau du groupe de plateforme) et se mettre d'accord pour établir une liste d'amers en commun L{amers en commun}.

Afin de bien faire comprendre les étapes du procédé mises en oeuvre par l'invention, l'exemple qui suit est donné dans le cas d'un système comprenant deux plateformes, $10_1$, $10_2$, deux amers inconnus $20_1$, $20_2$, et en mettant en oeuvre des mesures de distances et de goniométries sur les deux amers.

Pour le calcul d'un positionnement plus précis, on considère les données suivantes :

$P_1$: ($x_1$, $y_1$) les coordonnées de la plateforme $10_1$ connues avec une précision $\sigma_x = \sigma_y = 50m$, où la lettre $\sigma$ désigne l'écart-type,

$P_2$: ($x_2$, $y_2$) les coordonnées de la plateforme $10_2$ connues avec une précision $\sigma_x = \sigma_y = 50m$,

$R_{ij}$ la mesure de distance de la plateforme $10_i$ sur l'amer $20_j$ avec une précision $\sigma_d = 1m$, avec

$$R_{1,2} = R(10_1, 20_1), R(10_1, 20_2), R(10_2, 20_1), R(10_2, 20_2)$$

$A_{ij}$ la mesure d'angle de la plateforme $10_i$ sur l'amer $20_j$ avec une précision $\sigma_a$ = 1m, $A_{1,2} = A(10_1, 20_1), A(10_1, 20_2), A(10_2, 20_1), A(10_2, 20_2)$.

Il est bien entendu que, sans sortir du cadre de l'invention, la description qui suit reste valable dans le cas de deux plateformes et d'un seul amer inconnu en commun pour exécuter le recalage de position.

Les dispositifs des plateformes ont effectué chacun les mesures suivantes:

- Le dispositif de mesures de positions estime les deux positions initiales $P_1$, $P_2$ pour les plateformes $10_1$, $10_2$, et leurs covariances respectives,
- Le dispositif de mesures de distances détermine les quatre mesures de distances $R_{ij}$ (mesure entre une plateforme et un amer, pour chaque plateforme ayant en commun un amer $R_{ij}(10_1, 20_2), R_{ij}(10_i, 20_1), R_{ij}(10_2, 20_1), R_{ij}(10_2, 20_2)$), et leurs variances respectives. Les variances interviennent dans la construction de la matrice de covariance B du vecteur de mesure m : B= E[(m-E(m)).(m-E(m))$^t$] = E(m.m$^t$)-E(m).E(m)$^t$, où E désigne l'espérance mathématique. Le ième sigma, $\sigma_i$ de la diagonale de B, correspond à la variance de la ième mesure considérée et les autres termes croisés (non diagonaux) de la matrice de covariance sont nuls sous l'hypothèse d'indépendances des mesures,
- Le dispositif de mesures d'angles va déterminer les quatre mesures d'angles $A_{ij}$ $A_{ij}$ ($A_{ij}(10_1, 20_2), A_{ij}(10_i, 20_1), A_{ij}(10_2, 20_1), A_{ij}(10_2, 20_2)$) et leurs variances respectives.

A partir de ces mesures de positions, de distances et d'angles, le procédé va estimer de manière plus précise la position d'au moins une plateforme, ce qui permet son recalage, notamment en cas de dérive trop importante par rapport à sa position initiale. Dans l'exemple qui suit, le traitement s'appuie sur une estimation de position mettant en oeuvre un critère de type maximum de vraisemblance, bien connu de l'homme de l'art.

Le vecteur d'état $u$ que le procédé cherche à estimer est constitué de l'ensemble des positions des N plateformes et des positions des amers même si ces dernières ne sont pas connues initialement.

On considère un vecteur d'état $u$ constitué des positions des plateformes (dans l'exemple : deux plateformes) et des amers de positions inconnues (dans l'exemple : deux amers), soit dans l'exemple : $u = P_1 P_2 A_1 A_2$ avec $P_1$, $P_2$, $A_1$ et $A_2$ les sous vecteurs contenant les coordonnées des positions. Nous verrons plus loin comment est initialisé ce vecteur d'état.

D'une façon générale, on dispose :

- De M mesures de positions des plateformes,
- De L mesures d'angles disponibles sur les noeuds, au plus une mesure d'angle pour chaque couple d'entités (plateforme, amer),
- De K mesures de distances disponibles sur les noeuds.

Le nombre d'amers inconnus est I et le nombre de noeuds est M+I.

Le vecteur d'observation m de dimension N=2M+L+K est constitué de l'ensemble de ces mesures :

$$m = \begin{bmatrix} m_1 \\ \vdots \\ m_N \end{bmatrix}$$

, chaque observation $m_i$ d'une position correspond à deux observations $x_i$ et $y_j$.

Le vecteur d'état $u$, vecteur des positions des nœuds= plateformes et amers, est de dimension 2(M+I).

Les mesures sont supposées indépendantes gaussiennes centrées et la densité de probabilité des mesures a pour expression :

$$p(m/u) = \frac{1}{(2\pi)^{\frac{N}{2}} |B|^{1/2}} \exp\left( -\frac{1}{2} [m - h(u)]^T B^{-1} [m - h(u)] \right)$$

où h() est la fonction d'observation globale, explicitée ci-après :

La matrice de covariance du bruit de mesure B, de dimension 2M+L+K, a pour expression :

$$B = \begin{bmatrix} \ddots & & & \ddots & & & 0 \\ & \sigma_x^2 & & & 0 & \ddots & \\ & & \sigma_y^2 & & & \ddots & \ddots \\ \ddots & & & \sigma_\theta^2 & & & \\ & 0 & \ddots & & \sigma_d^2 & & \\ & & \ddots & \ddots & & & \ddots \\ 0 & & & & & & \ddots \end{bmatrix}$$

Si les coordonnées des positions de certaines plateformes ne sont pas indépendantes et sont connues avec une covariance sur les positions x,y, les sous matrices de covariance de positions seront de la forme $\begin{bmatrix} \sigma_x^2 & \sigma_{xy} \\ \sigma_{xy} & \sigma_y^2 \end{bmatrix}$ plutôt que $\begin{bmatrix} \sigma_x^2 & 0 \\ 0 & \sigma_y^2 \end{bmatrix}$.

La fonction d'observation globale h : m=h(*u*), avec m le vecteur d'observation, le vecteur d'état *u* des positions des noeuds (plateforme et/ou amer) est constitué :

- de la fonction d'observation $h_p$ des positions,
- de la fonction d'observation $h_a$ des angles,
- de la fonction d'observation $h_d$ des distances.

La notion de fonction d'observation de position $h_p$, d'angle $h_a$ et de distance $h_d$ est bien connue de l'homme du métier et ne sera pas explicitée.

Si on observe de façon non bruitée un noeud i de coordonnées Mi (xi, yi), on a pour la fonction d'observation des positions :

$$h_p\left(x_{i,}y_i\right) = \left(x_{i,}y_i\right)$$

Si on observe de façon non bruitée la direction d'un noeud j de coordonnées Mj (xj, yj) à partir d'un noeud Mi (xi, yi), on a pour la fonction d'observation des angles :

$$h_a\left(x_{i,}y_{i,}x_{j,}y_j\right) = \mathrm{atan}\left(y_{j-}y_i, x_{j-}x_i\right),$$

Si on observe de façon non bruitée la distance d'un noeud j de coordonnées Mj (xj, yj) à partir d'un noeud Mi (xi, yi) (distance entre le noeud i et le noeud j), on a pour la fonction d'observation des distances :

$$h_d\left(x_{i,}y_{i,}x_{j,}y_j\right) = \sqrt{\left(x_j - x_i\right)^2 + \left(y_j - y_i\right)^2}.$$

Sous les hypothèses précédentes de bruit (observation bruitée avec un bruit gaussien centré), le vecteur de position *u* peut être estimé de façon optimale avec un critère du maximum de vraisemblance. Le critère consiste alors à maximiser la probabilité *p(m/u)* ou indifféremment à minimiser la forme quadratique $Q(u) = [m - h(u)]^T B^{-1} [m - h(u)]$.

Pour ceci, il est possible d'utiliser l'algorithme de Gauss-Newton, bien connu des gens du métier et d'exécuter les étapes décrites ci-après.

On effectue un développement du vecteur d'état *h(u)* au premier ordre :

$$h(u) = h(u_0) + H(u - u_0)$$

$h(u) = h(u_0) + H(u - u_0)$

On calcule la matrice Jacobienne H, de dimension (2M+L+K, 2M) de la fonction d'observation globale :

$$H = \begin{bmatrix} & \vdots & & \vdots & \\ \cdots & \dfrac{\partial h_i}{\partial x_j} & \dfrac{\partial h_1}{\partial y_j} & \cdots \\ & \vdots & & \vdots & \end{bmatrix}$$

La matrice H est constituée des sous-matrices jacobiennes des fonctions d'observation $h_p$ $h_a$ et $h_d$ :

$$H = \begin{bmatrix} \vdots \\ H_p \\ H_d \\ H_a \\ \vdots \end{bmatrix}$$

Les observations de positions conduisent aux sous-matrices suivantes :

$$H_p = \begin{bmatrix} & \vdots & \\ \cdots & \begin{matrix} 1 & 0 \\ 0 & 1 \end{matrix} & \cdots \\ & \vdots & \end{bmatrix}$$

Les observations angulaires conduisent aux sous-matrices suivantes :

$$H_a = \begin{bmatrix} & & & \vdots & & & \\ \cdots & -\dfrac{y_i - y_j}{d_{ij}^2} & \dfrac{x_{im} - x_j}{d_{ij}^2} & \cdots \dfrac{y_i - y_j}{d_{ij}^2} & -\dfrac{x_{im} - x_j}{d_{ij}^2} & \cdots \\ & & & \vdots & & & \end{bmatrix}$$

où

$$d_{ij} = \sqrt{\left(x_i - x_j\right)^2 + \left(y_i - y_j\right)^2}$$

Les observations de distances conduisent aux sous-matrices suivantes :

$$H_d = \begin{bmatrix} & & & \vdots & & & \\ \cdots & -\left(x_i - x_j\right)/d_{icj} & -\left(y_i - y_j\right)/d_{ij} & \cdots\left(x_i - x_j\right)/d_{icj} & -\left(y_i - y_j\right)/d_{ij} & \cdots \\ & & & \vdots & & & \end{bmatrix}$$

où

$$d_{ij} = \sqrt{\left(x_i - x_j\right)^2 + \left(y_i - y_j\right)^2} \; .$$

Le vecteur $u_0$ est initialisé de la façon suivante :

- les 2M premières composantes sont initialisées avec les positions initiales des plateformes (mesures de positions),
- les 2I dernières composantes sont initialisées par une heuristique, telle que, par exemple, les intersections des directions données par les mesures d'angles ou les intersections des cercles données par les mesures de distances, ou encore par pseudo linéarisation. Ce type d'heuristique pour l'initialisation d'un état inconnu est bien connu de l'homme de l'art :

$$u_o = \begin{bmatrix} \vdots \\ x_i \\ y_i \\ \vdots \end{bmatrix}$$

Pour une linéarisation du problème en $u_0$ , linéarisation expliquée plus loin dans la description, le gradient du critère Q s'écrit :

$\nabla Q = 2.H^T .B^{-1} [m - h(u_0) - H (u - u_0)]$ avec $^T$ signifiant le transposé, et l'estimateur du maximum de vraisemblance a pour expression :

$$\hat{u} = u_0 + \left( H^T B^{-1} H \right)^{-1} H^T B^{-1} \left[ m - h(u_0) \right].$$

L'estimateur du max de vraisemblance s'écrit alors :

$\hat{u}_i = u_0 + A.Y$ estimation sur tous les noeuds, $\hat{u}_i$ regroupe toutes les estimations de positions pour tous les noeuds, avec :

$$Y = \begin{bmatrix} \vdots \\ a_{ij} - a_{Oij} \\ d_{ij} - d_{Oij} \\ x_i - x_{io} \\ y_i - y_{io} \\ \vdots \end{bmatrix}$$

$$A = \left( H^T B^{-1} H \right)^{-1} H^t B^{-1}$$

$a_{ij} - a_{Oij}$ correspond au résidu, c'est-à-dire à la différence entre les mesures d'angles et les valeurs théoriques calculées avec la fonction d'observation $h_a$ en prenant pour position les positions estimées.

La matrice de covariance de l'estimateur a pour valeur :

$$P = \left( H^T B^{-1} H \right)^{-1}$$

Cette estimation $\hat{u}_i = u_0 + A.Y$ peut ensuite être itérée en faisant une estimation linéaire et en définissant le critère d'arrêt par un seuil sur la norme de $\|u_i - u_{i-1}\|$ correspondant à l'ensemble des noeuds.

En final, l'exécution des étapes du procédé génère un vecteur comprenant :

- toutes les réestimations de positions pour toutes les plateformes,
- une estimation de position pour tous les amers.

Les deux premières composantes de la valeur estimée du vecteur u donnent l'estimation de la position du premier noeud et les composantes $u_{2j-1}$ et $u_{2j}$ donnent les composantes x, y du jième noeud.

Ces informations actualisées de position des plateformes correspondent au recalage d'une plateforme et sont transmises d'une plateforme recalée vers les autres plateformes de façon à optimiser la tenue de situation du système, i.e., la connaissance plus précise des positions des plateformes.

Sans sortir du cadre de l'invention, il est possible de l'appliquer à la localisation d'émetteurs à partir de stations de mesures dont les positions sont imprécises. Les émetteurs sont alors considérés comme des amers radios et les stations de mesures comme des plateformes. Dans cette application, ce n'est pas le recalage de position des plateformes que l'on va rechercher mais une estimation de la position de l'amer et de sa précision prenant compte les imprécisions de position des plateformes. Ceci est particulièrement utile pour les réseaux de goniométrie mobiles dans lesquels les stations de mesures sont mobiles avec des imprécisions de position souvent importantes. Celles-ci ne sont pas prises en compte dans les procédés classiques de triangulation, ce qui peut conduire à des surestimations importantes de précision et donc à des localisations d'émetteurs erronées. L'application de la présente invention permet de réaliser des estimations correctes de localisation des émetteurs avec une estimation conforme de la précision de cette estimation.

Afin d'illustrer ce cas d'application, un exemple constitué seulement de deux plateformes cherchant à localiser un émetteur radio ou amer est explicité. Dans cet exemple : $u = [P_1\ P_2]$ avec $P_1\ P_2$ les sous vecteurs contenant les coordonnées des positions des deux plateformes. On suppose que chaque plateforme est une station de goniométrie mobile effectuant une mesure d'angle sur l'émetteur radio.

Un premier exemple chiffré considère les données suivantes : M=4

$P_1$ : (0,0) coordonnées de la plateforme $10_1$ connues avec une précision $\sigma x = \sigma y = 50$ m
$P_2$ : (2000,0) coordonnées de la plateforme $10_2$ connues avec une précision $\sigma_x = \sigma_y = 50$m
$A_1$ : situé en (1000,1000) coordonnées de l'amer $20_1$ de position non connue par le réseau de station
$A_2$ : situé en (1000,-1000) coordonnées de l'amer $20_2$ de position non connue par le réseau de station

L'écart-type de précision (en x et en y) des plateformes après recalage est de 36 m, soit un gain de l'ordre de 30% sur la précision initiale. Rappelons qu'un recalage individuel n'est pas possible sur amer de position non connue.

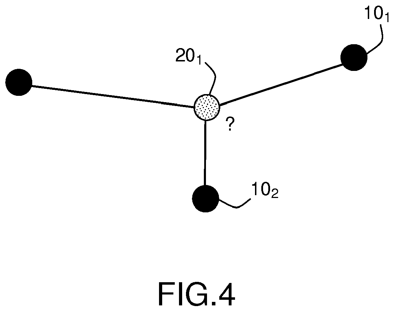

La figure 4 illustre un deuxième exemple chiffré avec deux plateformes mobiles cherchant à localiser un émetteur radio. Avec deux plateformes et des mesures de goniométries sur l'émetteur radio, le procédé permet d'obtenir une localisation prenant en compte les imprécisions des positions des plateformes données ci-après.

Soit :

$P_1$: (0,0) les coordonnées de la plateforme $10_1$ connues avec une précision $\sigma_x = \sigma_y = 50$m
$P_2$ : (2000,0) les coordonnées de la plateforme $10_2$ connues avec une précision $\sigma_x = \sigma_y = 50$m
$A_{13}$ la mesure d'angle de la plateforme $10_1$ sur l'émetteur (amer) $20_1$ avec une précision $\sigma_a = 1$
$A_{23}$ la mesure d'angle de la plateforme $10_2$ sur l'émetteur $20_1$ avec une précision $\sigma_a = 1°$

Les mesures disponibles sont :

- Les deux estimations initiales de position : $P_1$, $P_2$ et leurs covariances respectives,
- Les deux mesures d'angles $A_{13}$ et $A_{23}$ et leurs variances respectives.

La précision DRMS (racine carrée de la trace de la matrice de covariance) de localisation (en x et en y) de l'émetteur est de 5300 m en prenant en compte les imprécisions de positions des goniomètres mobiles alors qu'elle serait de 1700 m avec un procédé classique de triangulation (qui considère les positions des goniomètres comme des ancres de positions parfaitement connues).

Le procédé selon l'invention permet avantageusement après recalage d'obtenir des positions d'unités mobiles au sein d'un groupe avec une précision élevée. Il permet aussi d'estimer correctement la précision de localisation d'émetteurs à partir de stations de mesures radiomobiles de positions imprécises.

## Revendications

**1.** - Procédé de recalage collaboratif de plateformes dans un réseau comprenant M plateformes ($10_1$, $10_2$) dont les positions sont connues avec une certaine imprécision, avec M supérieur ou égal à deux, et I amers ($20_1$) de positions non connues perçus par les M plateformes, avec I supérieur ou égal à un, lesdites plateformes s'échangeant des informations, ledit procédé comportant au moins les étapes suivantes :

Considérer un vecteur d'état u constitué des positions des M plateformes et I amers,
Déterminer un vecteur d'observation m de dimension égale à 2M+K+L avec :

- M mesures de positions des plateformes,
- L mesures d'angles effectuées entre des couples d'entités plateforme/amer, avec au plus une mesure d'angle pour chaque couple d'entité plateforme/amer,
- K mesures de distances effectuées entre des couples d'entités plateforme/amer,

Estimer le vecteur d'état *u* de dimension 2(M+I) en utilisant un critère de maximum de vraisemblance prenant en compte le vecteur d'observation m,
Déduire du vecteur d'état estimé, simultanément les coordonnées des positions des plateformes et amers, et transmettre les nouvelles coordonnées de chaque plateforme recalée aux plateformes et amers en liaison avec ladite plateforme,
selon lequel vecteur d'état *u* est estimé selon l'une des deux dispositions suivantes :

- en maximisant la probabilité :

$$p(m/u) = \frac{1}{(2\pi)^{\frac{N}{2}}|B|^{1/2}} \exp\left(-\frac{1}{2}[m-h(u)]^T B^{-1}[m-h(u)]\right) \; ;$$

- en minimisant la forme quadratique :

$$Q(u) = [m-h(u)]^T B^{-1}[m-h(u)] \; ;$$

avec N la dimension du vecteur d'observation, B la matrice de covariance des mesures, *h(u)*, la fonction d'observation globale de u, T la transposée.

2. - Procédé selon la revendication 1 le vecteur d'état u étant estimé en minimisant Q(u), selon lequel le procédé utilise l'algorithme de Gauss-Newton et il exécute les étapes suivantes :

Développement du vecteur d'état h(u) au premier ordre :

$$h(u) = h(u_0) + H(u-u_0)$$

Calcul de la matrice Jacobienne H, de dimension (2M+L+K, 2M) de la fonction d'observation globale.

$$H = \begin{bmatrix} & \vdots & & \vdots & \\ \cdots & \frac{\partial h_i}{\partial x_j} & & \frac{\partial h_1}{\partial y_j} & \cdots \\ & \vdots & & \vdots & \end{bmatrix}$$

avec la sous-matrice d'observation de position:

$$H_p = \begin{bmatrix} & & & \vdots & & & \\ \cdots & -\frac{y_i-y_j}{d_{ij}^2} & \frac{x_{im}-x_j}{d_{ij}^2} & \cdots & \frac{y_i-y_j}{d_{ij}^2} & -\frac{x_{im}-x_j}{d_{ij}^2} & \cdots \\ & & & \vdots & & & \end{bmatrix}$$

où

$$d_{ij} = \sqrt{(x_i - x_j)^2 + (y_i - y_j)^2}$$

avec la sous-matrice d'observation de distances :

$$H_d = \begin{bmatrix} \ldots & -(x_i - x_j)/d_{icj} & -(y_i - y_j)/d_{ij} & \ldots(x_i - x_j)/d_{icj} & -(y_i - y_j)/d_{ij} & \ldots \end{bmatrix}$$

où

$$d_{ij} = \sqrt{(x_i - x_j)^2 + (y_i - y_j)^2}$$

Initialisation du vecteur d'état $u_0$ : les 2M premières composantes sont initialisées avec les positions initiales des plateformes et les 2I dernières composantes sont initialisées par une heuristique, avec le nombre d'amers de positions inconnues:

$$u_o = \begin{bmatrix} \vdots \\ x_i \\ y_i \\ \vdots \end{bmatrix}$$

Définition d'un estimateur du maximum de vraisemblance par $\hat{u} = u_0 + (H^T B^{-1} H)^{-1} H^T B^{-1} [m - h(u_0)]$ après linéarisation du vecteur $u_0$, Itération en faisant une estimation linéaire et en définissant le critère d'arrêt par un seuil sur la norme de $\|u_i - u_{i-1}\|$ correspondant à l'ensemble des M plateformes et I amers afin d'obtenir un vecteur comprenant :

- l'ensemble des réestimations de positions pour toutes les plateformes,
- une estimation de position pour tous les amers.

**3.** - Procédé selon l'une des revendications précédentes pour l'estimation des positions d'un ou de plusieurs amers radio dans un réseau de radiogoniomètres mobiles en prenant en compte les imprécisions sur les positions des plateformes.

**4.** - Système permettant le recalage collaboratif d'au moins une plateforme dans un réseau comprenant au moins deux plateformes ($10_1$, $10_2$) et un amer ($20_1$) de position non connue **caractérisé en ce que** chaque plateforme comprend au moins un module de communication (11) configuré pour échanger des informations avec au moins une deuxième plateforme, un module de mesures de distances (12), un dispositif de mesures d'angles (13), un estimateur de position (14) et un module de calcul de position configuré pour calculer la nouvelle position d'une plateforme à partir de mesures de distances, de mesures d'angles et de mesures de positions, en exécutant les étapes du procédé selon l'une des revendications 1 à 3.

**5.** - Système selon la revendication 4 **caractérisé en ce qu'**une plateforme est équipée d'une base de données (15).

**Patentansprüche**

**1.** Verfahren zur kollaborativen Neupositionierung von Plattformen in einem Netzwerk, umfassend M Plattformen ($10_1$, $10_2$), deren Positionen mit einer gewissen Ungenauigkeit bekannt sind, wobei M größer oder gleich zwei ist, und I Landmarken ($20_1$) unbekannter Positionen, die von den M Plattformen wahrgenommen werden, wobei I größer oder gleich eins ist, wobei die Plattformen untereinander Informationen austauschen, wobei das Verfahren mindestens folgende Schritte aufweist:

Betrachten eines Zustandsvektors $u$, der aus den Positionen der M Plattformen und I Landmarken gebildet ist, Bestimmen eines Beobachtungsvektors m mit einer Abmessung gleich 2M + K + L, wobei:

- M Positionsmessungen der Plattformen,
- L Winkelmessungen, die zwischen Entitätspaaren von Plattform/Landmarke durchgeführt werden, mit höchstens einer Winkelmessung für jedes Entitätspaar von Plattform/Landmarke,
- K Abstandsmessungen zwischen Entitätspaaren von Plattform/Landmarke,

Schätzen des Zustandsvektors u mit einer Abmessung 2(M + I) unter Verwendung eines Maximum-Likelihood-Kriteriums, das den Beobachtungsvektor m berücksichtigt,
Ableiten, von dem geschätzten Zustandsvektor, gleichzeitig der Koordinaten der Positionen der Plattformen und Landmarken, und Übertragen der neuen Koordinaten jeder neu positionierten Plattform an die Plattformen und Landmarken, die mit der Plattform in Verbindung stehen,
gemäß dem Zustandsvektor u gemäß einer der beiden folgenden Bestimmungen geschätzt wird:

- durch Maximierung der Wahrscheinlichkeit:

$$p(m/u) = \frac{1}{(2\pi)^{\frac{N}{2}}|B|^{1/2}} \exp\left(-\frac{1}{2}\left[m - h(u)\right]^T B^{-1}\left[m - h(u)\right]\right)$$

- durch Minimierung der quadratischen Form:

$$Q(u) = \left[m - h(u)\right]^T B^{-1}\left[m - h(u)\right]$$

wobei N die Abmessung des Beobachtungsvektors, B die Kovarianzmatrix der Messungen, $h(u)$, die globale Beobachtungsfunktion von u, T die Transponierte ist.

2. Verfahren nach Anspruch 1, wobei der Zustandsvektor $u$ durch Minimierung von Q(u) geschätzt wird, gemäß dem das Verfahren den Gauß-Newton-Algorithmus verwendet und es die folgenden Schritte ausführt:
Entwicklung des Zustandsvektors $h(u)$ in erster Ordnung:

$$h(u) = h(u_0) + H(u - u_0)$$

Berechnung der Jakobischen Matrix H, mit einer Abmessung (2M + L + K, 2M) der globalen Beobachtungs-funktion.

$$H = \begin{bmatrix} \vdots & \vdots \\ \cdots \dfrac{\partial h_i}{\partial x_j} & \dfrac{\partial h_i}{\partial y_j} \cdots \\ \vdots & \vdots \end{bmatrix}$$

mit der Submatrix der Positionsbeobachtung:

$$H_p = \begin{bmatrix} & & & \vdots & & & \\ \cdots & -\dfrac{y_i - y_j}{d_{ij}^2} & \dfrac{x_{im} - x_j}{d_{ij}^2} & \cdots & \dfrac{y_i - y_j}{d_{ij}^2} & -\dfrac{x_{im} - x_j}{d_{ij}^2} & \cdots \\ & & & \vdots & & & \end{bmatrix}$$

worin

$$d_{ij} = \sqrt{(x_i - x_j)^2 + (y_i - y_j)^2}$$

mit der Submatrix der Abstandsbeobachtung:

$$H_d = \begin{bmatrix} \vdots \\ \ldots & -(x_i - x_j)/d_{icj} & -(y_i - y_j)/d_{ij} & \ldots (x_i - x_j)/d_{icj} & -(y_i - y_j)/d_{ij} & \ldots \\ \vdots \end{bmatrix}$$

worin

$$d_{ij} = \sqrt{(x_i - x_j)^2 + (y_i - y_j)^2}$$

Initialisierung des Zustandsvektors $u_0$: Die 2M ersten Komponenten werden mit den Anfangspositionen der Plattformen initialisiert und die 2I letzten Komponenten werden durch eine Heuristik, mit der Anzahl von Landmarken mit unbekannten Positionen, initialisiert:

$$u_o = \begin{bmatrix} \vdots \\ x_i \\ y_i \\ \vdots \end{bmatrix}$$

Definition eines Maximum-Likelihood-Schätzers durch $\hat{u} = u_0 + (H^T B^{-1} H)^{-1} H^T B^{-1} [m - h(u_0)]$ nach Linearisierung des Vektors $u_0$,
Iteration durch Vornehmen einer linearen Schätzung und durch Definieren des Abbruchkriteriums durch einen Schwellenwert auf der Norm von $\|u_i - u_{i-1}\|$, der dem Satz von M Plattformen und I Landmarken entspricht, um einen Vektor zu erzielen, der Folgendes umfasst:

- der Satz der Positionsneuschätzungen für alle Plattformen,
- eine Positionsschätzung für alle Landmarken.

3. Verfahren nach einem der vorhergehenden Ansprüche zur Schätzung der Positionen einer oder mehrerer Funklandmarken in einem mobilen Radiogoniometernetzwerk unter Berücksichtigung der Ungenauigkeiten bei den Positionen der Plattformen.

4. System, das die kollaborative Neupositionierung mindestens einer Plattform in einem Netzwerk ermöglicht, das mindestens zwei Plattformen ($10_1$, $10_2$) und eine Landmarke ($20_1$) mit unbekannter Position umfasst, **dadurch gekennzeichnet, dass** jede Plattform mindestens ein Kommunikationsmodul (11), das konfiguriert ist, um Informationen mit mindestens einer zweiten Plattform auszutauschen, ein Abstandsmessmodul (12), eine Winkelmessvorrichtung (13), einen Positionsschätzer (14) und ein Positionsberechnungsmodul umfasst, das konfiguriert ist, um die neue Position einer Plattform anhand von Abstandsmessungen, Winkelmessungen und Positionsmessungen zu berechnen, durch Ausführen der Schritte des Verfahrens nach einem der Ansprüche 1 bis 3.

5. System nach Anspruch 4, **dadurch gekennzeichnet, dass** eine Plattform mit einer Datenbank (15) ausgestattet ist.

**Claims**

1. A method for the collaborative readjustment of platforms in a network comprising M platforms ($10_1$, $10_2$) whose positions are known with a certain degree of inaccuracy, M being greater than or equal to two, and I landmarks ($20_1$), whose positions are unknown, visible to the M platforms, I being greater than or equal to one, said platforms exchanging information, said method containing at least the following steps:

considering a state vector u consisting of the positions of the M platforms and I landmarks,
determining an observation vector m of dimension equal to 2M + K + L, with:

- M measurements of position of the platforms,
- L measurements of angles between pairs of platform/landmark entities with at most one angle measurement for each pair of platform/landmark entity,
- K measurements of distances between pairs of platform/landmark entities,

estimating the state vector $u$ of dimension 2(M + I) using a maximum likelihood criterion that takes into account the observation vector m,
deducing simultaneously, from the estimated state vector, the coordinates of the positions of the platforms and of the landmarks, and transmitting the new coordinates of each readjusted platform to the platforms and landmarks in contact with said platform,
according to which state vector u is estimated according to one of the two following provisions:

- by maximising the probability:

$$p(m/u) = \frac{1}{(2\pi)^{\frac{N}{2}}|B|^{1/2}} \exp\left(-\frac{1}{2}[m - h(u)]^T B^{-1}[m - h(u)]\right)$$

- by minimising the quadratic form:

$$Q(u) = [m - h(u)]^T B^{-1}[m - h(u)]$$

N being the dimension of the observation vector, B the covariance matrix of the measurements, $h(u)$, the global observation function of u, T the transpose.

2. The method according to claim 1, the state vector $u$ being estimated by minimising Q(u), according to which the method uses the Gauss-Newton algorithm and it executes the following steps:

performing a first-order expansion of the state vector $h(u)$:

$$h(u) = h(u_0) + H(u - u_0)$$

calculating the Jacobian matrix H, of dimension (2M + L + K, 2M) of the global observation function.

$$H = \left[ \cdots \frac{\partial h_i}{\partial x_j} \quad \frac{\partial h_1}{\partial y_j} \cdots \right]$$

with the position observation sub-matrix being as follows:

$$H_p = \left[ \cdots \quad -\frac{y_i - y_j}{d_{ij}^2} \quad \frac{x_{im} - x_j}{d_{ij}^2} \quad \cdots \quad \frac{y_i - y_j}{d_{ij}^2} \quad -\frac{x_{im} - x_j}{d_{ij}^2} \quad \cdots \right]$$

where

$$d_{ij} = \sqrt{\left(x_i - x_j\right)^2 + \left(y_i - y_j\right)^2}$$

with the distance observation sub-matrix being as follows:

$$H_d = \begin{bmatrix} \cdots & -\left(x_i - x_j\right)/d_{icj} & -\left(y_i - y_j\right)/d_{ij} & \cdots & \left(x_i - x_j\right)/d_{icj} & -\left(y_i - y_j\right)/d_{ij} & \cdots \end{bmatrix}$$

where

$$d_{ij} = \sqrt{\left(x_i - x_j\right)^2 + \left(y_i - y_j\right)^2}$$

initialising the state vector $u_0$: the 2M first components are initialised with the initial positions of the platforms and the 2I last components are initialised by a heuristic, with the number of landmarks of unknown positions:

$$u_0 = \begin{bmatrix} \vdots \\ x_i \\ y_i \\ \vdots \end{bmatrix}$$

defining a maximum likelihood estimator by $\hat{u} = u_0 + (H^T B^{-1} H)^{-1 \, -1} H^T B^{-1} [m - h(u_0)]$ after linearisation of the vector $u_0$,
iterating by making a linear estimation and by defining the stopping criterion by a threshold on the norm of $\|u_i - u_{i-1}\|$ corresponding to the set of M platforms and I landmarks so as to obtain a vector comprising:

- the set of position re-estimations for all platforms,
- a position estimation for all landmarks.

3. The method according to one of the preceding claims for estimating the positions of one or more radio landmarks in a network of mobile radiogoniometers while taking into account the inaccuracies in the positions of the platforms.

4. A system enabling the collaborative readjustment of at least one platform in a network comprising at least two platforms ($10_1$, $10_2$) and one landmark ($20_1$) of unknown position, **characterised in that** each platform comprises at least one communication module (11) configured to exchange information with at least a second platform, a distance measurement module (12), an angle measurement device (13), a position estimation device (14) and a position calculation module configured to calculate the new position of a platform from distance measurements, from angle measurements and from position measurements, by executing the steps of the method according to one of claims 1 to 3.

5. The system according to claim 4, **characterised in that** a platform is equipped with a database (15).

FIG.1

FIG.2

FIG.3

FIG.4

## RÉFÉRENCES CITÉES DANS LA DESCRIPTION

**Documents brevets cités dans la description**

- US 20120081248 A1
- US 20110059752 A1